## Europäisches Patentamt

## European Patent Office

## Office européen des brevets

(19)

(11) Veröffentlichungsnummer : **0 459 972 A2**

# (12) EUROPÄISCHE PATENTANMELDUNG

(21) Anmeldenummer : **91890112.5**

(22) Anmeldetag : **17.05.91**

(51) Int. Cl.$^5$ : **B01D 46/20,** B01D 29/09, B01D 33/04

(30) Priorität : **29.05.90 AT 1172/90**

(43) Veröffentlichungstag der Anmeldung :
**04.12.91 Patentblatt 91/49**

(84) Benannte Vertragsstaaten :
**BE DE FR GB IT NL SE**

(71) Anmelder : **BÖHLER Gesellschaft m.b.H.**
**Mariazellerstrasse 25**
**A-8605 Kapfenberg (AT)**

(72) Erfinder : **Kutilin, Paul**
**Johann Böhm Strasse 30**
**A-8605 Kapfenberg (AT)**

(54) **Verfahren und Vorrichtung zum Abtrennen von Feststoffteilchen aus flüssigen und gasförmigen Medien.**

(57)    Die Erfindung bezieht sich auf ein Verfahren und eine Vorrichtung zum Abtrennen von Feststoffteilchen aus flüssigen oder gasförmigen Medien durch Tiefenfiltration. Mit der Erfindung soll ein oftmaliges Wechseln des Filtermittels, was mit einem aufwendigen und gegebenenfalls gefahrvollen Öffnen der Einrichtung verbunden ist, unterbleiben können. Hiezu wird das Filtermittel, welches eine Filtrationsquerschnittsfläche überdeckt, relativ zur Filtrationsquerschnittsfläche bewegt. Die Relativbewegung erfolgt bei im wesentlichen verschiebungsfreier Aufbringung des Filtermittels auf eine Auflagefläche.

EP 0 459 972 A2

Die Erfindung betrifft ein Verfahren zum Abtrennen von Feststoffteilchen aus flüssigen oder gasförmigen Medien durch Tiefenfiltration, bei welchem ein teilchenbeladenes Medium in einer Filtrationsquerschnittsfläche durch ein flächig ausgebildetes Filtermittel, in welchem im wesentlichen die Feststoffteilchen gehalten werden, geleitet wird. Weiters betrifft die Erfindung eine Vorrichtung nach dem Oberbegriff des Anspruches 10.

Auf verschiedenen technischen und hygienischen Gebieten ist es erforderlich, Feststoffteilchen mit kleinen Durchmessern, sog. Schwebeteilchen, aus flüssigen und gasförmigen Medien abzuscheiden bzw. auszufiltrieren. Für eine Abscheidung von Feststoffteilchen ist prinzipiell eine Oberflächenfiltration, bei welcher ein teilchenbeladenes Medium durch ein als Maschengewebe oder dgl. mit geringerer Maschenweite bzw. Einzeldurchlaßquerschnitten gebildetes Filtermittel geleitet wird, oder eine Tiefenfiltration, bei welcher die Schwebeteilchen in einem Filtermittel wie Nadelfilz, Vlies oder dgl. zumindest teilweise gehalten bzw. eingelagert werden, einsetzbar. Eine Oberflächenfiltration hat den Vorteil, daß das Filtermittel in dessen Funktion zumeist regenerierbar, z.B. durch Gegenstrom, ist. Als Nachteil ist jedoch anzusehen, daß dabei wirkungsvoll zumeist nur Teilchen mit größeren Durchmessern abscheidbar sind.

Sollen aus einem Medium auch kleinste Schwebeteilchen ausfiltert werden, also, wenn an das Medium besondere Reinheitsforderungen gestellt werden, kann im wesentlichen lediglich eine Tiefenfiltration erfolgen. Bei der Tiefenfiltration werden die insbesondere kleinen Feststoffteilchen im Filtermittel eingelagert und gehalten, wobei eine Regenerierung, beispielsweise durch ein kurzzeitiges Führen von Medium im Gegenstrom, nicht ausreichend wirkungsvoll ist, weil dadurch keine entsprechende Freilegung der Filtermittelporen bzw. kein wesentlicher Austrag der Teilchen aus dem Filtermittel erfolgt. Somit muß im praktischen Betrieb ein mit Feststoffteilchen beladenes und dadurch dem Durchströmen des Mediums einen hohen Widerstand entgegensetzendes Filtermittel ausgetauscht bzw. durch ein neues ersetzt werden. Um einen kontinuierlichen Filterbetrieb, insbesondere bei hohem Gehalt an Schwebeteilchen, aufrechtzuerhalten, werden oft zwei oder mehrere Filtereinrichtungen parallel im Medienstrom angeordnet und alternativ betrieben bzw. alternativ deren Filtermittel erneuert. Eine derartige Vorgangsweise ist nicht nur aufwendig sondern erfordert auch hohe Manipulationszeiten für einen Wechsel des Filtermittels.

Besondere Schwierigkeiten können bei der Tiefenfiltration von aggressiven Medien, insbesondere beim oftmaligen Wechseln bzw. Austauschen von Filtermittel, entstehen, weil zum Filterwechsel die Einrichtung geöffnet werden muß und dabei auch geringfügiges Austreten von gegebenenfalls umweltschädigenden Medien zu vermeiden ist. Eine Tiefenfiltration wird beispielsweise bei der elektrolytischen Metallbeschichtung bzw. Galvanotechnik zur Abscheidung von Metallschlamm eingesetzt. In der Metallverarbeitungstechnik kann dieses Verfahren vorteilhaft zur Abscheidung von Schwebeteilchen wie karbiden, Graphit und dgl., aus Beizflüssigkeiten, z.B. Beiz- säuren oder Beizsäuregemischen, verwendet werden.

Dabei ist es allerdings nötig, große Filterquerschnittsflächen für die Tiefenfiltration, die große und aufwendige Einrichtungen erfordert, vorzusehen oder das Filtermittel oftmals bei Ansteigen des Durchflußwiderstandes für das Medium zu erneuern, was mit einem aufwendigen und gegebenenfalls gefahrvollen Öffnen der Einrichtung verbunden ist. Hier will die Erfindung Abhilfe schaffen und aufgabengemäß ein Verfahren und eine Vorrichtung angeben, mit welchen ein oftmaliges Unterbrechen der Filtration zum Wechsel des Filtermittels unterbleiben kann und große Mengen an Feststoffteilchen mit kleinem Durchmesser aus flüssigen oder gasförmigen Medien durch Tiefenfiltation abtrennbar sind.

Diese Aufgaben werden bei einem gattungsgemäßen Verfahren durch die kennzeichnenden Merkmale des Anspruchs 1 und bei einer gattungsgemäßen Vorrichtung durch die kennzeichnenden Merkmale des Anspruchs 10 gelöst. Im kennzeichnenden Teil der Unteransprüche sind vorteilhafte Weiterbildungen und Ausführungen der Erfindung angegeben.

Die durch die Erfindung erreichten Vorteile sind im wesentlichen darin zu sehen, daß ohne Unterbrechung des Filtrationsvorganges bei Anstieg des Durchflußwiderstandes für das Medium durch Einlagerung und Halten von Feststoffteilchen im Filtermittel neues bzw. von Teilchen unbeladenes Filtermittel zur Tiefenfiltration die Filtrationsfläche überdeckend auf diese aufbringbar ist. Erfindungswesentlich dabei ist, daß das Filtermittel auf einer für das Medium weitgehend durchlässigen Auflage angeordnet ist bzw. wird und eine Relativbewegung zwischen dem vorzugsweise bandförmigen Filtermittel und der Filtrationsquerschnittsfläche erfolgt, ohne daß eine entsprechende Relativbewegung zwischen Filtermittel und Auflage eintritt. Das Filtermittel wird beim Aufbringen von neuen bzw. teilchenunbeladenen Bereichen desselben auf die Auflage keinen hohen Zugspannungen ausgesetzt, sodaß eine Rißgefahr vermieden ist. In einer bevorzugten Ausführung wird von einer Bereitstellungseinrichtung das Filtermittel entnommen und im wesentlichen verschiebungsfrei auf eine zylindermantelförmige Auflage einer um ihre Achse drehend bewegbaren Trommel auf deren durch ein Abdecksegment begrenzte Filtrationsquerschnittsfläche aufgebracht. Erhöht sich der Durchströmwiderstand für das Medium auf einen vorbestimmten Wert, so erfolgt auf einfache Weise bei Drehung der Trommel infolge eines im wesentlichen unbewegtes Abdecksegments eine Bewegung der Filtrationsquerschnittsfläche und unbeladenes Filtermittel wird auf die Filtrationsquerschnittsfläche aufgelegt. Damit verbunden ist ein Abnehmen des mit An- und Einlagerungen von Feststoffteilchen beladenen Filtermittels, welches vorzugsweise durch Aufrollen kompaktiert wird.

Im folgenden wird die Erfindung anhand einer Zeichnung beispielsweise näher erläutert.

Es zeigen

     Fig. 1 einen Schnitt einer Filtrationseinrichtung
     Fig. 2 eine Draufsicht der Einrichtung nach Fig. 1 mit abgehobenem Deckel

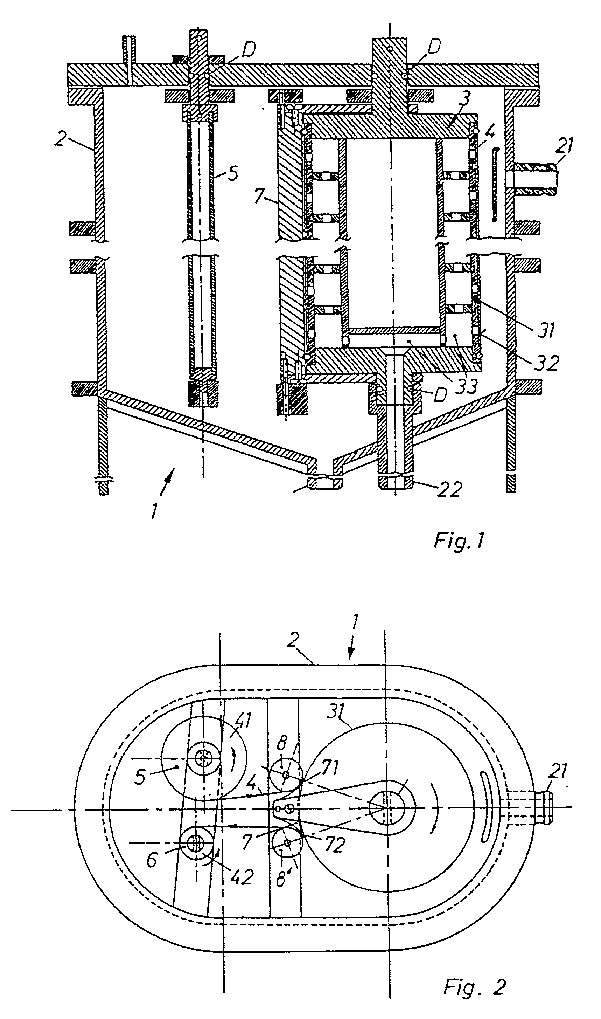

Fig. 1 zeigt eine Ausführungsform einer erfindungsgemäßen Einrichtung , wobei ein mit Schwebeteilchen kontaminiertes Medium durch einen Einlaß 21 in eine Filtrationseinrichtung 1 eingebracht und in gereinigter Form durch einen Auslaß 22 ausgetragen wird. Das Medium durchströmt ein Filtermittel 4 , welches auf einer durchlässigen Auflage 31 eines Zylindermantels 32 einer Trommel 3 anliegt und wird durch Trommelinnenräume zu einem Auslaß 22 weitergeleitet. Die Trommel 3 ist drehbar in einem Gehäuse 2 der Filtrationseinrichtung 1 gelagert, wobei durch ein bezogen auf das Gehäuse 2 weitgehend unbewegbares bzw. starres Abdecksegment 7 einen Teil der Zylindermantelfläche 32 der Trommel 3 abgedeckt ist. Eine rohrförmige Welle einer Filtermittelbereitstellungseinrichtung 5 für ein bandförmiges Filtermittel 4 ist mittels einer durch das Gehäuse 2 ragenden Welle antreibbar. Zur Abdichtung der Wellen und eines Hohlzapfens der Trommel sind Dichtungen D vorgesehen.

Fig. 2 zeigt in Draufsicht insbesondere eine Anordnung eines Filtermittels in einer erfindungsgemäßen Einrichtung 1. Von einer Filtermittelbereitstellungseinrichtung 5 mit nicht kontaminiertem Filtermittel 41 ist ein bandförmiges Filtermittel 4 entnehmbar und eine Filtermittelkompaktierungseinrichtung 6 für mit an- und eingelagerten Feststoffteilchen enthaltendes Filtermittel 42 ist zu dessen Aufnahme vorgesehen. Die für das Medium im wesentlichen durchlässige Auflage 31 der drehbaren Trommel 3 ist teilweise durch ein Abdecksegment 7, welches im wesentlichen unbewegbar mit dem Gehäuse 2 verbunden ist, abgedeckt bzw. abgedichtet. Ein bandförmiges Filtermittel 4 liegt im freien Bereich der Auflage 31 der Trommel 3 an dieser an und ist mittels achsparallel zur Trommel bewegbaren Rollen 8 und 8' an die Enden 71 und 72 des Abdecksegments und/oder der Auflage 31 angestellt. Bei einer Rotation der Trommel 3, der Filtermittelbereitstellungseinrichtung 5 und der Filtermittelkompaktierungseinrichtung 6 wird auf einfache Weise ein teilchenfreies Filtermittel im wesentlichen verschiebungsfrei auf die Auflage aufgebracht und das Filtermittel 4 relativ zur Filtrationsquerschnittsfläche bewegt. Eine kontinuierliche oder schrittweise Bewegung kann durch Messung der Druckdifferenz in den Bereichen der Zu- und Ableitung des Mediums oder dgl. erfolgen.

**Patentansprüche**

1. Verfahren zum Abtrennen von Feststoffteilchen aus flüssigen oder gasförmigen Medien durch Tiefenfiltration, bei welchem ein teilchenbeladenes Medium in einer Filtrationsquerschnittsfläche durch ein flächig ausgebildetes Filtermittel, in welchem im wesentlichen die Feststoffteilchen gehalten werden, geleitet wird, dadurch gekennzeichnet, daß das Filtermittel, welches die Filtrationsquerschnittsfläche überdeckt, relativ zur Filtrationsquerschnittsfläche bewegt wird.

2. Verfahren nach Anspruch 1, dadurch gekennzeichnet, daß das Filtermittel und die Filtrationsquerschnittsfläche schrittweise oder kontinuierlich zueinander relativ bewegt werden.

3. Verfahren nach Anspruch 1 oder 2, dadurch gekennzeichnet, daß der feststoffhaltende Teil des Filtermittels aus dem Bereich der Filtrationsquerschnittsfläche ausgetragen wird.

4. Verfahren nach einem der Ansprüche 1 bis 3, dadurch gekennzeichnet, daß ein bandförmig ausgebildetes Filtermittel in einer Bandlängsrichtung relativ zur Filtrationsquerschnittsfläche bewegt wird.

5. Verfahren nach einem der Ansprüche 1 bis 4, dadurch gekennzeichnet, daß eine bewegbare Trommel mit einer für das Medium im wesentlichen durchlässigen zylindermantelförmigen Auflagefläche für das Filtermittel, deren Auflagefläche durch ein, im wesentlichen unbewegtes, sich in Richtung einer Erzeugenden des Zylindermantels erstreckendes Abdecksegment teilweise abgedichtet und der Durchfluß des Mediums im Abdeckbereich im wesentlichen verhindert wird, kontinuierlich, mit geringer Geschwindigkeit oder schrittweise mit einer Schrittlänge , die im wesentlichen gleich oder kleiner ist als die sich in Tangentialrichtung erstreckende Länge der Filtrationsquerschnittsfläche, gedreht wird und bezogen auf das Abdecksegment die Filtrationsquerschnittsfläche und die Auflagefläche , auf welcher das von einer Bereitstellungseinrichtung abgenommene, bandförmige Filtermittel im wesentlichen verschiebungsfrei aufgebracht wird, bewegt wird.

6. Verfahren nach einem der Ansprüche 1 bis 5, dadurch gekennzeichnet, daß die die Feststoffe haltenden Bereiche des Filtermittels bzw. der feststoffhaltende Teil des bandförmigen Filtermittels kompaktiert , insbesondere aufgerollt, werden bzw wird.

7. Verfahren nach einem der Ansprüche 1 bis 6, dadurch gekennzeichnet, daß die Relativbewegung von Filtermittel und Filtrationsquerschnitt bzw. die Drehbewegung der Trommel durch eine Änderung, insbesondere Erhöhung,des Durchflußwiderstandes des Filtermittels für das Medium gesteuert wird.

8. Verwendung des Verfahrens nach einem der Ansprüche 1 bis 7 für die Abtrennung von Feststoffteilchen mit einem Durchmesser von kleiner als 3 µm, vorzugsweise kleiner als 2 µm, insbesondere kleiner als 1,5 µm, aus flüssigen oder gasförmigen Medien.

9. Verwendung des Verfahrens nach einem der Ansprüche 1 bis 7 für die Abtrennung von Schwebeteilchen, insbesondere Metallschlamm.Metalloxyde, Metallhydroxyde, Karbonate Metallkarbide, Graphit oder dgl. aus gebrauchten Elektrolyten und Beizflüssigkeiten, z.B. Metallbeschichtungselektrolyte, Beizsäuren oder Beizsäuregemische, die insbesondere bei galvanotechnischen und Metall-Verarbeitungsprozessen eingesetzt werden.

10. Vorrichtung zum Abtrennen von Feststoffteilchen aus flüssigen oder gasförmigen Medien durch Tiefenfiltration, bei welcher ein teilchenbeladenes Medium durch eine Zuleitung (21) in das Innere eines Gehäuses (2) einer Filtrationseinrichtung (1) einleitbar und das filtrierte Medium durch eine Ableitung (22) austragbar ist, wobei in Durchströmrichtung über eine Filtrationsquerschnittfläche, welche von einer für das Medium im wesentlichen durchlässigen Auflage (31) gebildet ist, und ein diesen Filtrationsquerschnitt überdeckendes Filtermittel (4) , in welchem die Feststoffteilchen zumindest teilweise gehalten werden, angeordnet ist, dadurch gekennzeichnet, daß das Filtermittel (4) und die Filtrationsquerschnittsfläche relativ zueinander bewegbar sind.

11. Vorrichtung nach Anspruch 10, dadurch gekennzeichnet, daß die Filtrationsquerschnittsfläche, welche vom Filtermittel (4) überlappend überdeckt ist, zumindest teilweise zylindermantelförmig ausgebildet ist.

12. Vorrichtung nach Anspruch 10 oder 11. dadurch gekennzeichnet, daß die Filtrationsquerschnittsfläche zumindest teilweise durch den Zylindermantel (32) einer drehbaren Trommel (3) gebildet ist, aus deren Innenraum (33) das gefilterte Medium austragbar ist.

13. Vorrichtung nach einem der Ansprüche 10 bis 12, dadurch gekennzeichnet, daß der durch eine für das Medium im wesentlichen durchlässige Auflage (31) für das Filtermittel gebildete Zylindermantel (32) der drehbaren Trommel (3) teilweise durch ein im wesentlichen unbewegbares Abdecksegment (7) abdichtbar ist.

14. Vorrichtung nach einem der Ansprüche 10 bis 13, dadurch gekennzeichnet, daß im Gehäuse (2) der Filtrationseinrichtung (1) eine Filtermittelbereitstellungseinrichtung (5) für ein feststoffteilchenfreies Filtermittel, insbesondere eine drehbare Filtermittelvorratsrolle (41) und eine Filtermittelkompaktierungseinrichtung (6), insbesondere eine Filtermittelaufspuleinrichtung, für feststoffhaltendes Filtermittel (42) eingesetzt sind und das bandförmige Filtermittel (4) von der Filtermittelbereitstellungseinrichtung (5) zumindest teilweise über die durch eine Auflage für das Filtermittel gebildete zylindermantelförmige Filtrationsquerschnittsfläche (32) der Trommel (3) zur Kompaktierungseinrichtung (6) angeordnet ist.

15. Vorrichtung nach einem der Ansprüche 10 bis 14, dadurch gekennzeichnet, daß das bandförmige Filtermittel (4) im Bereich der übergänge ( 71,72) des Abdecksegmentes (7) zur zylindermantelförmigen Filtrationsquerschnittsfläche (32) der Trommel (3) durch vorzugsweise achsparallel zur Trommel bewegbare Rollen ( 8, 8 ) an die im wesentlichen für das Medium durchlässige Anlage (31) anstellbar ist.

16. Verwendung der Vorrichtung nach einem der Ansprüche 10 bis 15 zum Abtrennen von Feststoffteilchen mit einem Durchmesser kleiner als 3 µm, vorzugsweise kleiner als 2 µm, insbesondere kleiner als 1,5 µm, aus flüssigen oder gasförmigen Medien.

17. Verwendung einer Vorrichtung nach einem der Ansprüche 10 bis 15 zum Abtrennen von Schwebeteilchen, insbesondere Metallschlamm, Metalloxyde, Metallhydroxyde, Karbonate,Metallkarbide,Graphit od. dgl.,aus gebrauchten Elektrolyten und Beizflüssigkeiten, z.B. Metallbeschichtungselektrolyte, Beizsäurem oder Beizsäuregemische, die insbesondere bei galvanotechnischen- und Metall-Verarbeitungsprozessen eingesetzt werden.

Fig. 1

Fig. 2